# EUROPÄISCHE PATENTSCHRIFT

(11) **EP 0 484 491 B1**
(45) Veröffentlichungstag und Bekanntmachung des Hinweises auf die Patenterteilung: **02.08.1995**
(21) Anmeldenummer: 91909752.7
(22) Anmeldetag: 28.05.1991
(51) Int. Cl.: F16L 59/06, F16L 59/20

(54) **UMMANTELTE ROHRLEITUNG ZUR FÖRDERUNG VON GASFÖRMIGEN ODER FLÜSSIGEN MEDIEN**
JACKETED PIPELINE FOR THE CONVEYANCE OF GASEOUS OR LIQUID MEDIA
CANALISATION ENROBEE POUR LE TRANSPORT DE MILIEUX GAZEUX OU LIQUIDES

(30) Priorität: 31.05.1990 DE 4017510
(43) Veröffentlichungstag der Anmeldung: 13.05.1992
(73) Patentinhaber: PREUSSAG ANLAGENBAU GMBH, 30625 Hannover (DE); KERSPE, Jobst-Hinrich, D-69151 Neckargmünd (DE)
(72) Erfinder: KERSPE, Jobst-Hinrich, D-6903 Neckargmünd 2 (DE); KECK, Dietrich, D-4570 Quakenbrück (DE)
(74) Vertreter: Haar, Lucas Heinz Jörn, Dipl.-Ing.
(86) Internationale Anmeldenummer: DE9100454
(87) Internationale Veröffentlichungsnummer: WO9119129

(56) Entgegenhaltungen:
- WO-A-85/02003
- US-H- 594
- Koeltechniek, Band 74, Nr. 1, Januar 1981, Zeist, NL; H. Robert; "Combinatie van isolatiematerialen bij de thermische isolatie van pijpleidingen", Seiten 13-14

## Beschreibung

Die Erfindung betrifft eine Rohrleitung zur Förderung von gasförmigen oder flüssigen Medien, deren Temperatur von der Umgebungstemperatur abweicht, mit einem Mantelrohr und einem mit radialem Abstand in dem Mantelrohr angeordneten Mediumrohr, das mit einer Wärmedämmung ummantelt ist, wobei das Mediumrohr an im Abstand voneinander liegenden Festpunkten mit axialer Vorspannung an dem als Widerlager dienenden Mantelrohr abgestützt ist.

Eine Rohrleitung der angegebenen Art ist aus der DE-PS 1258215 bekannt. Sie hat den Vorteil, daß ein großer Teil der temperaturbedingten Dehnung des Mediumrohres durch Vorspannung gegenüber dem Mantelrohr kompensiert wird. Das Mantelrohr dient gleichzeitig als Schutzrohr und bietet die Möglichkeit, den Ringraum zwischen Mantelrohr und Mediumrohr zu evakuieren. Durch das Evakuieren wird das Wärmedämmaterial im Ringraum trocken gehalten und ein optimaler Korrosionsschutz für das Mediumrohr gewährleistet. Weiterhin läßt sich mit Hilfe des Unterdrucks die Wärmedämmung erheblich steigern. Bei den bekannten Ausführungen derartiger Rohrleitungen wird das Mediumrohr durch Abstandshalter, die in regelmäßigen Abständen vorgesehen sind, in dem Mantelrohr zentriert. Diese Abstandshalter bilden zahlreiche Wärmebrücken, die zu nachteiligen Wärmeverlusten führen. Sie bringen ferner einen erheblichen Bau- und Montagaufwand mit sich.

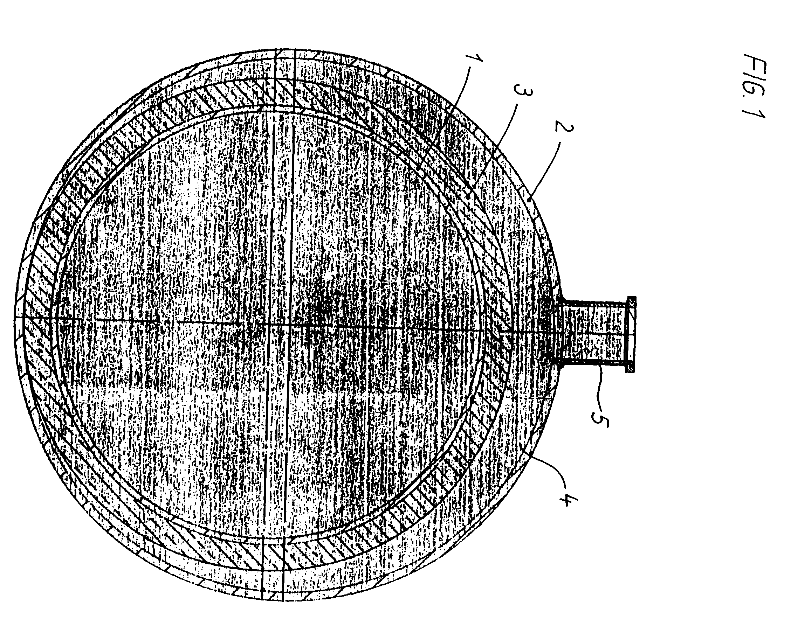

Aus der US-H-594 ist eine Rohrleitung für eine Verlegung unter Wasser bekannt, bei der ein Ringraum zwischen Mediumrohr und Mantelrohr mit einem Gas gefüllt ist, dessen Druck größer ist als der erwartete Umgebungsdruck, der das Mantelrohr von außen beaufschlagt, so daß das Mantelrohr in der Lage ist, höheren äußeren Drücken standzuhalten. Bei der in Figur 1 gezeigten Ausführungsform der Rohrleitung ist das Mediumrohr von einem Isoliermaterial und dieses wiederum von einer Dampfsperre umgeben. Zwischen der Dampfsperre und dem Mantelrohr ist der mit Gas gefüllte Ringraum vorgesehen. Das Isoliermaterial ist hierbei ausreichend druckfest, um ein Zusammendrücken der Dampfsperre unter der Wirkung des Druckgases zu verhindern. Zur Lagerung des Mediumrohres im Mantelrohr ist das Isoliermaterial nicht vorgesehen, sondern die rohrförmige Dampfsperre ist mit Hilfe von Ringen im Rohrsystem zentriert.

Aufgabe der Erfindung ist es, bei einer Rohrleitung der eingangs genannten Art den Bauaufwand zu verringern und die Isolierwirkung zu verbessern.

Erfindungsgemäß wird diese Aufgabe dadurch gelöst, daß die Wärmeddämmung aus druckfesten Formstücken besteht, die aus Mikro-Glasfasern oder Mikro-Mineralfasern hergestellt sind und eine solche Druckfestigkeit haben, daß das Mediumrohr von den Formstücken in einem Isolierabstand von der Innenwand des Mantelrohres gehalten wird und daß der Außendurchmesser der Wärmedämmung kleiner ist als der Innendurchmesser des Mantelrohres, so daß das Mediumrohr bis auf kurze Bereiche in der Nähe eines Festpunktes exzentrisch im Mantelrohr angeordnet ist.

Erfindungsgemäß wird somit eine vorgespannte, ummantelte Rohrleitung geschaffen, bei der das Mediumrohr ausschließlich mit Hilfe des Isoliermaterials im Mantelrohr gelagert ist. Überraschenderweise hat sich dabei gezeigt, daß die zur Isolierung verwendeten Formstücke aus Mikro-Glasfasern oder Mikro-Mineralfasern neben der erforderlichen Druckfestigkeit auch eine hohe Abriebfestigkeit haben, so daß sie den mechanischen Beanspruchungen in der Rohrleitung bei der Montage und vor allem im Betrieb hervorragend widerstehen und damit eine lange Lebensdauer der Rohrleitung gewährleisten. Durch den Wegfall der Abstandshalter und die günstigen Wärmedämmeigenschaften der Formstücke kann der Außendurchmesser bei der erfindungsgemäßen Rohrleitung im Vergleich zum Durchmesser des Mediumrohrs sehr klein bemessen werden, wodurch sich die Material- und Tiefbaukosten beim Verlegen der Rohrleitung verringern. Da der Außendurchmesser der Formstücke kleiner ist als der Innendurchmesser des Mantelrohrs, verbleibt zwischen den Formstücken und dem Mantelrohr ein freier Hohlraum, der ein schnelles Evakuieren des Ringraumes zwischen Mediumrohr und Mantelrohr ermöglicht.

Je nach Durchmesser der Rohrleitung können die Formstücke als geschlossene Ringe oder als Ringsegmente ausgebildet sein, die durch ein Spannband zusammengehalten werden.

Erfindungsgemäß ist weiterhin vorgesehen, daß das Mediumrohr an den Festpunkten von einem Flanschring oder von Flanschringsegmenten gehalten wird, wobei der Flanschring oder die Flanschringsegmente mit dem Mantelrohr und dem Mediumrohr verschweißt sind und auf ihrer Außenseite zusammen mit den benachbarten Bereichen des Mantelrohrs mit Formstücken aus Isoliermaterial ummantelt sind. Die Formstücke können hierbei ebenfalls aus Mikro-Glasfasern oder Mikro-Mineralfasern bestehen. Weiterhin kann vorgesehen sein, daß der Festpunkt und die dem Festpunkt benachbarten Bereiche des Mantelrohrs von einem Schutzrohr umgeben sind, das, vorzugsweise durch Schweißen, dicht mit dem Mantelrohr verbunden ist und die Formstücke aus Isoliermaterial umhüllt. Das Schutzrohr kann hierbei als Lager dienen, so daß das den Festpunkt bedeckende Isoliermaterial keiner mechanischen Beanspruchung ausgesetzt ist. Vorteilhaft ist der Innenraum des Schutzrohrs durch Öffnungen in dem Mantelrohr mit dem Ringraum zwischen Mantelrohr und Mediumrohr beiderseits des Flanschrings verbunden. Diese Verbindung ermöglicht bei geschlossenem Flanschring das Evakuieren der Ringräume auch über einen Festpunkt hinaus, wobei der von dem Schutzrohr umschlossene Raum ebenfalls evakuiert wird.

Die Erfindung wird nachfolgend anhand eines Ausführungsbeispiels näher erläutert, das in der Zeichnung dargestellt ist. Es zeigen
- Figur 1: einen Querschnitt durch eine vorgespannte, ummantelte Rohrleitung gemäß der Erfindung und
- Figur 2: einen Längsschnitt durch einen Festpunkt der erfindungsgemäßen Rohrleitung gemäß Figur 1.

Figur 1 zeigt einen Querschnitt durch eine vorgespannte, ummantelte Rohrleitung an einer von einem Festpunkt entfernten Stelle. Die Rohrleitung besteht aus einem Medienrohr 1, einem Mantelrohr 2 und einer Wärmedämmung 3, die das Mediumrohr 1 allseits umgibt. Die Wärmedämmung 3 ist aus einzelnen ringförmigen Formstücken gebildet, die auf das Mediumrohr 1 aufgeschoben sind, wobei zwischen dem Mediumrohr 1 und der Wärmedämmung 3 kein nennenswerter Zwischenraum verbleibt. Die Wärmedämmung 3 besteht aus verdichteten Mikro-Glasfasern oder Mikro-Mineralfasern und hat eine solche Druckfestigkeit, daß sie das Gewicht des Mediumrohres 1 einschließlich des darin befindlichen Mediums ohne nennenswerte Stauchung auf das Mantelrohr 2 überträgt. Der Außendurchmesser der Wärmedämmung 3 ist geringer als der Innendurchmesser des Mantelrohrs 2. Das Mediumrohr 1 ist daher bis auf kurze Bereiche in der Nähe eines Festpunkts exzentrisch im Mantelrohr 2 angeordnet.

Zwischen der Oberfläche der Wärmedämmung 3 und der Innenwand des Mantelrohres 2 ist ein Hohlraum 4 vorhanden, der zur Erhöhung der Isolierwirkung bis auf einen Druck von etwa 3 mbar evakuiert werden kann. Hierzu ist das Mantelrohr 2 mit einem Saugstutzen 5 versehen, der nach dem Evakuieren des Hohlraums 4 an einen Drucksensor eines Leckwarnsystems anschließbar ist.

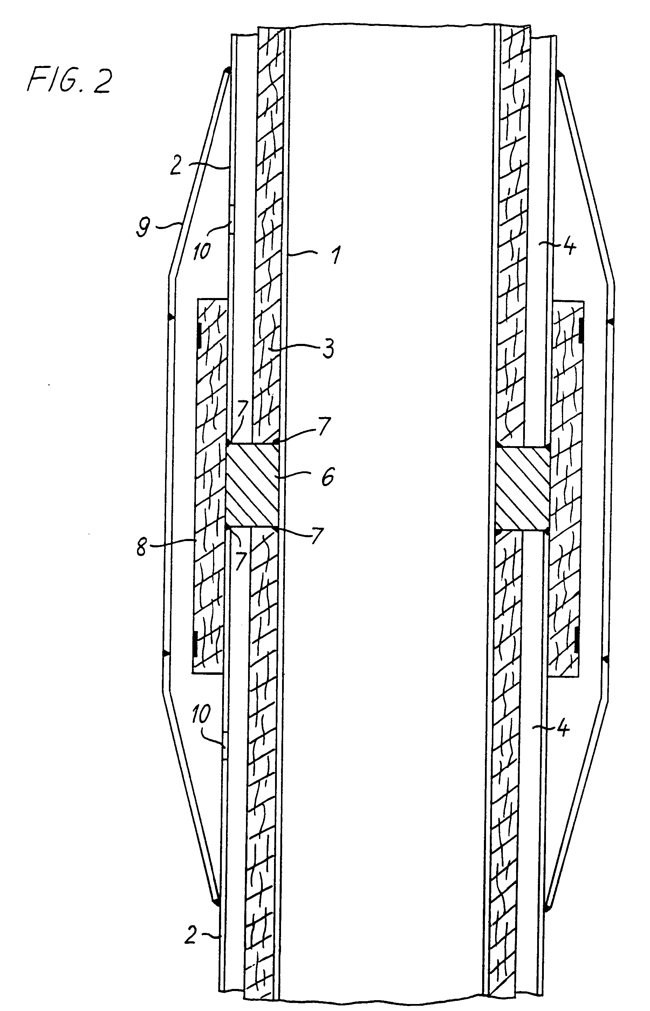

Figur 2 zeigt einen Längsschnitt durch die Rohrleitung im Bereich eines Festpunktes. An dem Festpunkt sind das Mediumrohr 1 und zwei Mantelrohre 2 durch einen Flanschring 6 miteinander verbunden. Der Flanschring 6 umgreift das Mediumrohr 1 und ist durch Schweißnähte 7 befestigt. Die Enden der Mantelrohre 2 sind an die Stirnseiten des Flanschrings 6 angestoßen und dort ebenfalls durch Schweißnähte 7 befestigt. Die Wärmedämmung 3 reicht bis an den Flanschring 6 heran. Zusätzlich sind der Flanschring 6 und die an ihn angeschlossenen Nachbarbereiche der Mantelrohre 2 auf ihrer Außenseite mit einer Wärmedämmung 8 aus Glasfasermaterial umhüllt, die durch Spannbänder gehalten wird. Die an den Flanschring 6 angeschlossenen Enden der Mantelrohre 2 sind zusätzlich von einem Schutzrohr 9 umgeben, das durch Schweißen dicht mit den Mantelrohren 2 verbunden ist und die Wärmedämmung 8 mit Abstand umgibt. Öffnungen 10 in den Mantelrohren 2 verbinden den Innenraum des Schutzrohres 9 mit den Hohlräumen 4 im Innern der Mantelrohre 2. Hierdurch wird eine durchgehende Strömungsverbindung von einer zur anderen Seite des Flanschrings 6 geschaffen, so daß das Evakuieren des Hohlraums 4 von einer einzigen Stelle aus erfolgen kann. Auch im Bereich des Schutzrohres 9 ist daher die Verbesserung der Isolierwirkung durch Vakuum gegeben. Die Länge des Schutzrohres 9 wird zweckmäßig so groß bemessen, daß die durch Wärmeleitung im Bereich des Flanschrings 6 hervorgerufene Temperaturänderung in den Mantelrohren 2 an den Anschlußstellen des Schutzrohres 9 bereits weitgehend abgebaut ist.

## Patentansprüche

1. Rohrleitung zur Förderung von gasförmigen oder flüssigen Medien, deren Temperatur von der Umgebungstemperatur abweicht, mit einem Mantelrohr und einem mit radialen Abstand in dem Mantelrohr angeordneten Mediumrohr, das mit einer Wärmedämmung ummantelt ist, wobei das Mediumrohr an im Abstand voneinander liegenden Festpunkten mit axialer Vorspannung an dem als Widerlager dienenden Mantelrohr abgestützt ist, dadurch gekennzeichnet, daß die Wärmedämmung (3) aus druckfesten Formstücken besteht, die aus Mikro-Glasfasern oder Mikro-Mineralfasern hergestellt sind und eine solche Druckfestigkeit haben, daß das Mediumrohr (1) von den Formstücken in einem Isolierabstand von der Innenwand des Mantelrohres (2) gehalten wird und daß der Außendurchmesser der Wärmedämmung (3) kleiner ist als der Innendurchmesser des Mantelrohrs (2), so daß das Mediumrohr (1) bis auf kurze Bereiche in der Nähe eines Festpunkts exzentrisch im Mantelrohr (2) angeordnet ist.

2. Rohrleitung nach Anspruch 1, dadurch gekennzeichnet ist, dadurch gekennzeichnet, daß das Mediumrohr (1) an den Festpunkten von einem Flanschring (6) oder von Flanschringsegmenten gehalten wird, wobei der Flanschring (6) oder die Flanschringsegmente mit dem Mantelrohr (2) und dem Medienrohr (1) verschweißt sind und auf ihrer Außenseite zusammen mit den benachbarten Bereichen des Mantelrohrs (2) mit Formstücken aus Isoliermaterial (8) ummantelt sind.

3. Rohrleitung nach einem der vorhergehenden Ansprüche, dadurch gekennzeichnet, daß der Festpunkt und die dem Festpunkt benachbarten Bereiche des Mantelrohrs (2) von einem Schutzrohr (9) umgeben sind, das, vorzugsweise durch Schweißen, dicht mit dem Mantelrohr (2) verbunden ist und die Formstücke aus Isoliermaterial (8) umhüllt.

4. Rohrleitung nach einem der vorhergehenden Ansprüche, dadurch gekennzeichnet, daß der Innenraum des Schutzrohrs (9) durch Öffnungen (10) in dem Mantelrohr mit dem Ringraum (4) zwischen Mantelrohr (2) und Mediumrohr (1) beiderseits des Flanschrings (6) verbunden ist.

## Claims

1. A pipeline for the conveyance of gaseous or liquid media whose temperature differs from the ambient temperature, comprising an outer pipe jacket and a radially spaced medium-carrying pipe arranged in the interior of said outer pipe jacket and encased by a thermal insulation means, with said medium-carrying pipe, in being axially biased at relatively spaced specified locations, taking support upon said outer pipe jacket serving as an abutment, **characterized in that** said thermal insulation means (3) is comprised of formed structures capable of withstanding compressive loads and fabricated from micro glass fiber or micro mineral fiber, their resistance to compressive loads being such that said formed structures maintain said medium-carrying pipe (1) in a spaced relation to the inner wall of said outer pipe jacket (2) at an insulating distance, and that the outside diameter of said thermal insulation means (3) is smaller than the inside diameter of said outer pipe jacket (2), so that said medium-carrying pipe (1) is eccentrically arranged in said outer pipe jacket (2) except for short areas in the proximity of a specified location.

2. The pipeline as claimed in claim 1, **characterized in that** said medium-carrying pipe (1) is held at said specified locations by an annular flange (6) or by annular flange segments, with said annular flange (6) or said annular flange segments being welded to said outer pipe jacket (2) and said medium-carrying pipe (1), and their outside, together with the adjacent areas of said outer pipe jacket (2), being encased by formed structures fabricated from an insulation material (8).

3. The pipeline as claimed in any one of the preceding claims, **characterized in that** said specified location and the areas of said outer pipe jacket (2) adjacent to said specified location are surrounded by a protective pipe (9) which is connected fast with said outer pipe jacket (2) preferably by welding and encases said formed structures fabricated from an insulation material (8).

4. The pipeline as claimed in any one of the preceding claims, **characterized in that** the inner space of said protective pipe (9) is in communication with an annular chamber (4) formed between said outer pipe jacket (2) and said medium-carrying pipe (1) through apertures (10) provided in said outer pipe jacket on either side of said annular flange (6).

## Revendications

1. Canalisation pour le transport de milieux gazeux ou liquides dont la température diffère de la température ambiante, comprenant un tuyau d'enrobage et un tuyau de milieux qui est monté dans ledit tuyau d'enrobage à une distance radiale et qui est enveloppé d'une isolation thermique, ledit tuyau de milieux prenant appui, avec une précontrainte axiale, sur ledit tuyau d'enrobage servant de butée aux points fixes situés à distance les uns des autres, caractérisée en ce que ladite isolation thermique (3) est composée de pièces profilées qui sont résistantes à la compression, sont fabriquées de microfibres de verre ou de microfibres minérales et ont une résistance à la compression de telle sorte que ledit tuyau de milieux (1) est maintenu, par l'intermédiaire desdites pièces profilées, à une distance isolante de la paroi intérieure dudit tuyau d'enrobage (2), et que le diamètre extérieur de ladite isolation thermique (3) est inférieur au diamètre intérieur dudit tuyau d'enrobage (2) de manière que ledit tuyau de milieux (1) soit monté excentriquement dans ledit tuyau d'enrobage (2), à l'exception de zones courtes à proximité d'un point fixe.

2. Canalisation selon la revendication 1, caractérisée en ce que ledit tuyau de milieux (1) est maintenu aux points fixes par un anneau de bride (6) ou par des segments d'anneau de bride, ledit anneau de bride (6) ou lesdits segments d'anneau de bride étant soudés audit tuyau d'enrobage (2) et audit tuyau de milieux (1) et étant enrobés sur leur face extérieure, conjointement avec les zones adjacentes dudit tuyau d'enrobage (2), par l'intermédiaire de pièces profilées réalisées en matériau isolant (8).

3. Canalisation selon l'une des revendications précédentes, caractérisée en ce que ledit point fixe et lesdites zones dudit tuyau d'enrobage (2) adjacentes du point fixe sont entourés d'un tuyau protecteur (9) qui est fixé étroitement, de préférence par soudage, audit tuyau d'enrobage (2) et enveloppe lesdites pièces profilées réalisées en ledit matériau isolant (8).

4. Canalisation selon l'une des revendications précédentes, caractérisée en ce que la chambre intérieure dudit tuyau protecteur (9) est reliée à la chambre annulaire (4) située entre ledit tuyau d'enrobage (2) et ledit tuyau de milieux (1) par l'intermédiaire d'ouvertures (10) disposées dans ledit tuyau d'enrobage des deux côtés dudit anneau de bride (6).
